# EUROPÄISCHE PATENTSCHRIFT

(11) **EP 0 611 855 B1**
(45) Veröffentlichungstag und Bekanntmachung des Hinweises auf die Patenterteilung: **15.05.1996**
(21) Anmeldenummer: 94101712.1
(22) Anmeldetag: 04.02.1994
(51) Int. Cl.: E04F 17/02, F16L 27/10, F16L 41/12

(54) **Anordnung zum Verbinden zweier Rohrabschnitte des keramischen Innenrohres eines Schornsteins**
Device for connecting two internal ceramic pipe sections of a chimney
Dispositif pour l'assemblage de deux sections de tubes internes céramiques d'une cheminée

(30) Priorität: 10.02.1993 DE 4303954
(43) Veröffentlichungstag der Anmeldung: 24.08.1994
(73) Patentinhaber: Feodor Burgmann Dichtungswerke GmbH & Co., D-82515 Wolfratshausen (DE); ZIEGELWERK WALDSASSEN AG, D-95652 Waldsassen (DE)
(72) Erfinder: Bendl, Peter, D-82538 Geretsried (DE); Schwarz, Walter, D-95676 Wiesau (DE)
(74) Vertreter: Geyer, Werner, Dr.-Ing.

(56) Entgegenhaltungen:
- EP-A- 0 356 719
- EP-A- 0 443 222
- DE-A- 2 035 516

## Beschreibung

Die Erfindung bezieht sich auf eine Verbindung zweier Rohrabschnitte des keramischen Innenrohrs eines Über- bzw. Unterdruckschornsteines miteinander, bei der die einander zugewandten Endflächen beider Rohrabschnitte vorzugsweise planparallel abgeschnitten sind und an jedem Rohrabschnitt in axialem Abstand von jeder seiner Endflächen eine Außennut ausgebildet ist, in die Halteelemente formschlüssig eingreifen, die radial innen an einer Verbindungsmanschette vorspringen, welche die Endbereiche beider Rohrabschnitt außen überdeckt.

Moderne Heizkessel werden zum Erzielen eines möglichst hohen Wirkungsgrades im energiesparenden Niedertemperaturbereich gefahren, wobei nicht nur die latente Wärme des Abgases, sondern auch noch die Kondensatwärme des auftretenden Abgaskondensates nutzbar gemacht wird. Die starke Aggressivität des Abgaskondensates macht es allerdings erforderlich, dieses möglichst vollständig aus dem Schornstein zu leiten, um das Auftreten von Schäden an diesem zu verhindern (unter dem Begriff "Schornstein" werden hier sowohl Über- wie auch Unterdruckschornsteine verstanden). Dabei ist es u.a. auch erforderlich, ein unerwünschtes Austreten des Kondensates aus dem Schornstein zu verhindern, was insbesondere dann wesentlich wird, wenn der Schornstein ein Innenrohr aus Keramik aufweist, das aus einzelnen aneinander befestigten Innenrohrabschnitten zusammengesetzt ist. In diesem Fall muß an den Stoßstellen bzw. Verbindungsstellen der einzelnen Innenrohrabschnitte eine sichere Abdichtung geschaffen werden, um ein Austreten des Kondensates aus dem Innenrohr in die äußeren Schornsteinschalen und damit das Auftreten von Versottungsproblemen zu vermeiden.

Bei modernen Tieftemperatur- und Brennwertgeräten sind die Abgase so kalt, daß ihr natürlicher Auftrieb keinen ausreichend sicheren Abzug mehr gewährleistet, so daß der Einsatz zusätzlicher Elemente erforderlich wird, welche die Abgase im Schornstein "ziehen" oder "schieben". Hieraus ergeben sich auch zusätzliche neue Anforderungen an die Schornsteine dahingehend, daß diese auch eine bestimmte Druckbeständigkeit aufweisen müssen.

Aus der EP-A-0 443 222 ist eine Verbindung von miteinander über Distanzmittel in einem Abstand voneinander gehaltenen doppelwandigen Rohrabschnitten für einen Schornstein bekannt, bei dem allerdings die Rohrabschnitte aus nichtrostendem Edelstahl bestehen. Als Verbindungsglied ist eine aus Blech bestehende Verbindungsschelle in Form eines Schellenbandes vorgesehen, das bei der Montage mit seinen offenen Endbereichen übereinandergelegt wird und diese anschließend durch geeignete Zugmittel so gegeneinander angezogen werden, daß insgesamt um den Umfang der zu verbindenden Rohrabschnitte herum ein gewünschter Anpreßdruck aufgebaut wird. Verkantungen zwischen den miteinander zu verbindenden Rohrabschnitten können jedoch ebenso wie Veränderungen in der Relativlage der zu verbindenden Rohrabschnitte zueinander zu einem späteren Zeitpunkt, etwa wenn sich die Bauteile setzen, bei dieser bekannten Verbindungsanordnung nicht ausgeglichen werden. Auch in radialer Richtung kann es bei Auftreten großer Temperaturunterschiede zu einem weitgehend oder gar vollständigen Wegfall der aufgebrachten Vorspannung kommen, wenn sich infolge des Temperatureinflusses die metallischen Rohrenden in ihrem Durchmesser zusammenziehen.

Bei Innenrohren aus Keramik ist es bekannt, die einzelnen Innenrohrabschnitte an ihren Stoßstellen mittels eines als "Säurekitt" bezeichneten Spezialmörtels zu verbinden. Der Säurekitt ist jedoch so beschaffen, daß die geforderte Dichtheit nicht immer ausreichend gewährleistet ist. Säurekitt ist zwar kondensatdicht, bei Verkantung der zu verbindenden Teile jedoch nicht rißfest, was gerade bei Keramikrohren, die sich beim Brennen leicht verziehen können und deren Enden beim Zusammenbau nicht immer in einer guten Parallelität zueinander ausgerichtet sind, leicht zum Auftreten feiner Risse im Säurekitt in der Verbindungsfuge und damit zum Ausdringen von aggressivem Abgaskondensat führen kann. Da überdies der Säurekitt eine nur relativ kurze Verarbeitungsdauer bei Umgebungstemperatur aufweist, danach sogleich "glasig" wird und dann nicht mehr einsatzfähig ist, führt dies bei einem aus einzelnen Innenrohrabschnitten aufgebauten Schornstein zu einer relativ langen Montagezeit, die bis zu ca. 5 Std. dauern kann. Für die abschließende Endaushärtung des Säurekittes ist überdies eine Aushärtdauer von ca. 24 Stunden erforderlich.

In der DE-OS 40 00 654 wird eine Befestigung der eingangs genannten Art beschrieben, bei der die einzelnen Rohrabschnitte des Keramik-Innenrohrs mit planparallel abgeschnittenen Endflächen versehen sind, wobei zusätzlich zum Aufbringen des Säurekitts zwischen den gegeneinanderstoßenden Enden der zu verbindenden Rohrabschnitte zur Überdeckung der jeweiligen Stoßfugen von außen um die Rohrabschnitte im Stoßfugenbereich herumlaufende Spannmanschetten angebracht sind, die an ihren freien Enden über geeignete Spannmittel zum Aufbringen der gewünschten Spannung angezogen werden. Diese Spannmanschetten bestehen dabei bevorzugt aus Edelstahlblech und sind im Bereich ihrer axialen Enden an ihrem Innenumfang mit geeignet nach innen vorspringenden Formelementen versehen, deren jedes in eine entsprechend am zugeordneten Rohrabschitt angebrachte Nut beim Anlegen der Spannmanschette eingeführt wird. Bei verspannter Manschette ist so sichergestellt, daß es zu keinem unerwünschten Auseinanderlaufen der beiden zu verbindenden Rohrabschnitte kommen kann, wodurch beim Aushärten des Säurekitts ein sicherer Sitz erzielt wird. Die Spannmanschette wird auch nach dem Aushärten des Säurekittes nicht entfernt, sondern verbleibt an den jeweiligen Stoßstellen der miteinander verbundenen Innenrohrabschnitte und wird auch mit diesen z.B. vom Schornsteinkopf aus abschnittsweise in den Schornstein abgelassen bzw. kann mit dem Hausbau auch "von unten wachsen". Durch die planparallele Ausbildung der Stirnflächen an den Enden der miteinander zu verbindenden Rohrabschnitte wird eine gleichmäßig dicke und dichte Klebeschicht erzeugt, die zudem von der die Fuge überdeckenden Manschette von außen geschützt wird. Daneben übernimmt die Manschette auch noch zugleich die zugfeste Verbindung benachbarter Rohrabschnitte. Diese bekannte Befestigungsanordnung ist jedoch in Aufbau und Montage relativ aufwendig und damit teuer. Zudem besteht die Gefahr, daß die gespannte Manschette bzw. Rohrschelle bei einem späteren Setzen des Dichtungswerkstoffs ihrerseits nicht nachsetzen kann, wodurch wieder die Möglichkeit zum Auftreten von Undichtigkeiten gegeben ist.

Ausgehend hiervon liegt der Erfindung die Aufgabe zugrunde, eine Verbindung der eingangs genannten Art so zu verbessern, daß ihr Aufbau weniger aufwendig und ihre Montage erheblich rascher durchführbar ist und zudem auch eine gewisse Änderung der Relativlage der einzelnen zu verbindenden Rohrabschnitte zueinander (einschließlich des Auftretens leichter Verkantungen) zuverlässig ausgeglichen werden kann.

Erfindungsgemäß wird diese Aufgabe bei einer Verbindung der eingangs genannten Art dadurch gelöst, daß die Verbindungsmanschette aus elastomerem Werkstoff besteht und als eine ringförmig geschlossen umlaufende elastische Spanneinrichtung ausgebildet ist, die unter radialer Aufweitung sowie unter axialer Dehnung auf den Endbereichen beider Rohrabschnitte sitzt und diese unter Vorspannung axial gegeneinander anpreßt, wobei die in die Außennuten der Rohrabschnitte eingreifenden Halteelemente in Form von am Innenumfang der Verbindungsmanschette angeformten Formwülsten ausgebildet sind und auf der Außenseite der Verbindungsmanschette, der axialen Lage der Formwülste entsprechend, jeweils ringförmig umlaufende Spannfedern vorgesehen sind.

Die erfindungsgemäße Verbindung führt infolge der eingesetzten elastischen Manschette dazu, daß durch diese auch leichte Verkantungen der miteinander zu verbindenden Teile ohne Schwierigkeit ausgeglichen werden können. Da die elastische Spanneinrichtung unter Aufbau einer Vorspannung die beiden zu verbindenden Teile gegeneinander andrückt, ist auch bei einer infolge Setzens der miteinander verbundenen Bauteile später auftretenden Veränderung der Relativlage der einzelnen Innenrohrabschnitte zueinander ein entsprechender Ausgleich durch die elastische Spanneinrichtung ohne Schwierigkeit möglich. Dies umfaßt nicht nur den Ausgleich von Verkantungen der miteinander verbundenen Innenrohrabschnitte zueinander, sondern auch den Ausgleich auftretender Axialverschiebungen. Dadurch, daß bei der erfindungsgemäßen Anordnung die Anwendung von Säurekitt oder einem sonstigen Mörtel nicht mehr erforderlich ist, wird die Montage relativ einfach und ganz erheblich schneller als beim gattungsgemäßen Stand der Technik. Zudem ist jederzeit eine sofortige Einsatzfähigkeit gegeben, da die Spanneinrichtung fertig geliefert werden kann und nur noch aufgesetzt werden muß, ohne daß der Ablauf einer bestimmten Aushärtzeit abgewartet werden müßte. Die Einsparung an Montagezeit beträgt dabei etwa zwei Drittel der bislang aufzuwendenden Montagezeit. Dies führt zu einer Einsparung, welche die geringen Mehrkosten, die vielleicht für die Ausbildung der elastischen Spanneinrichtung anfallen, weitaus mehr als ausgleicht. Bei Einsatz der erfindungsgemäßen Verbindung läßt sich bei einem üblichen Kamin die Montagezeit von z.B. etwa 8 Std. auf etwa 3 Std. absenken, was nicht nur für den Fachmann, sondern gerade auch für den Endabnehmer eine erhebliche Zeitersparnis ergibt. Bei Anwendung der erfindungsgemäßen Verbindung kann der Kamin mit dem Haus von unten wachsen oder, abschnittsweise zusammengefügt, von oben eingelassen (abgesenkt) werden, so daß sich diese Verbindung auch besonders gut für die Ausführung von Renovierungen/Sanierungen eignet. Insgesamt ist das bekannte "Fugenproblem" durch die Erfindung deutlich sicherer gemacht worden.

Die bei der Erfindung eingesetzten, als Zugfedern ausgebildeten Spannfedern, die jeweils an den Stellen sitzen, an denen am Innenumfang der elastischen Verbindungsmanschette eine ringförmig umlaufende Formwulst ausgebildet ist, stellen sicher, daß die Formwülste auch in den ihnen zugeordneten Aufnahmenuten am Außenumfang der zu verbindenden Innenrohrabschnitte aufgenommen und sicher gehaltert werden. Durch die bei der Erfindung gegebene Vorspannung, unter der die Manschette im montierten Zustand die beiden einander jeweils gegenüberliegenden Endbereiche der miteinander zu verbindenden Innenrohrabschnitte gegeneinander preßt, wird nicht nur ein gutes "Andrücken" erreicht, sondern auch ein Abweichen der Rohrabschnitte von ihrer exakten Relativlage zueinander elastisch ausgeglichen. Gleichzeitig können Toleranzen bzw. Maßunterschiede, die durch den Fertigungsprozeß auftreten, ebenfalls ausgeglichen werden, wobei die eingesetzten Federn einen durch die Vorspannung bedingten Schrumpf ausgleichen. Auch ist ein Auseinanderziehen der Rohre und Formstücke voneinander durch die zugfeste Verbindung verhindert.

Bei Einsatz einer elastischen, entlang der Verbindungsstelle verlaufenden Dichtung, z.B. in Form einer elastomeren Strangdichtung, zur Abdichtung der Verbindungsstelle wird eine besonders vorteilhafte Ausgestaltung der erfindungsgemäßen Anordnung dadurch geschaffen, daß die elastische Dichtung als am Innenumfang der Verbindungsmanschette einstückig angeformter, radial nach innen vorspringender, im Querschnitt bevorzugt lippenförmiger oder im wesentlichen dreieckförmiger Dichtstreifen ausgebildet ist. Damit wird erreicht, daß bei der Montage nur die Verbindungsmaschette auf ein Ende eines der zu verbindenden Innenrohrabschnitte aufgesetzt und anschließend das zugewandte Ende des zu verbindenden zweiten Innenrohrabschnitts von oben her in die Manschette unter gleichzeitiger Aufdehnung derselben eingeführt werden muß. Beim Zusammendrücken der beiden Innenrohrabschnitte gegeneinander wird dann die im mittleren Bereich der Verbindungsmanschette nach innen vorstehende und auf der Endfläche des unten liegenden Innenrohrabschnitts aufliegende, nach innen vorspringende Dichtlippe automatisch zwischen beiden Stoßflächen der Innenrohrabschnitte verpreßt, so daß dort die gewünschte Dichtfunktion erreicht wird, ohne daß ein eigener Dichtungsstrang zusätzlich angebracht bzw. eingeführt werden müßte. Dabei besteht, insbesondere bei der Verwendung eines im Querschnitt im wesentlichen dreieckförmigen Dichtstreifens, auch noch zusätzlich die Möglichkeit, an den einander zugewandten Endflächen der beiden zu verbindenden Innenrohrabschnitte am Außenumfang eine der Formgebung des Dichtungsstreifens entsprechende Gegenfläche anzufasen, so daß der Dichtstreifen bei montierten Innenrohrabschnitten von der Innenseite der Verbindungsmanschette her insgesamt in eine entsprechende Gegennut eingreift und (bei geeigneter Dimensionierung) in dieser im Sinne einer guten Dichtwirkung verquetscht wird.

Besonders bevorzugt werden die ringförmig umlaufenden Spannfedern wenigstens teilweise in die Verbindungsmanschette eingelassen, um sie von deren Außenseite her zu schützen. Das Einsenken bzw. Einlassen kann dabei unterschiedlich stark vorgenommen werden, d.h. so, daß die Spannfedern nahezu vollständig in die Wandung der Verbindungsmanschette eingelassen sind, oder daß sie über die Außenfläche der Verbindungsmanschette um ein bestimmtes Maß überstehen. Bevorzugt können dabei die Spannfedern mit einer elastischen Schutzschicht, etwa einer elastischen Beschichtung oder Folie, nach außen hin noch zusätzlich abgedeckt werden, wobei in besonders vorteilhafter Ausgestaltung die Verbindungsmanschette auf ihrem Außenumfang (in axialer Richtung) zumindest teilweise, wenn nicht sogar ganz, mit einer elastischen Schutzschicht versehen ist.

Eine weitere vorzugsweise Ausgestaltung der Erfindung besteht auch darin, daß am Innenumfang der Verbindungsmanschette jedem Endbereich der Innenrohrabschnitte mindestens noch jeweils ein ringförmig umlaufender, einstückig mit der Verbindungsmanschette ausgebildeter Dichtungswulst zugeordnet ist, der unter elastischer Deformation gegen die Außenfläche des zugeordneten Innenrohrabschnitts anliegt. Hierbei wird somit die Abdichtung der Fuge nach außen nicht nur über die an den axialen Endbereichen der Verbindungsmanschette angeformten Formwülste erreicht, sondern noch zusätzlich durch weitere, in einem gewissen Abstand von diesen auf der Innenseite der Verbindungsmanschette zusätzlich umlaufende Dichtungswülste, die im montierten Zustand gegen die Außenfläche des anliegenden Innenrohrabschnitts verquetscht werden (wobei auch dort gegebenenfalls entsprechend ausgebildete Eingreifnuten für diese zusätzlichen Dichtungswülste angeordnet sein können). Für die Dichtungswülste können alle geeigneten Formgebungen eingesetzt werden. Bevorzugt werden die an der Stelle der umlaufenden Spannfedern auf der Innenseite der Verbindungsmanschette angebrachten Formwülste, die in entsprechende Außennuten der Innenrohrabschnitte im Sinne von Halteelementen eingreifen, kreisabschnittförmig oder trapezförmig ausgebildet. Hierdurch läßt sich ein guter Sitz bei vorzüglicher Dichtwirkung und guter Kräfteübertragbarkeit der Verbindungsmanschette in axialer Richtung erreichen.

Die eingesetzten Spannfedern werden bevorzugt als Spiral-Zugfeder ausgebildet und bestehen vorteilhafterweise aus rostfreiem Stahl. In vorteilhafter Weiterbildung der Erfindung werden die Spannfedern durch (vorzugsweise mindestens drei) geeignete Verbindungsglieder miteinander verbunden, wobei bevorzugt diese Verbindungsglieder als Metallstreifen, vorzugsweise aus rostfreiem Stahl, ausgebildet und mit ihren einen Enden an einer Spannfeder fest angebracht sind, während sie mit ihren anderen Enden an der anderen Spannfeder lösbar befestigt, z.B. einhakbar, sind. Hierdurch läßt sich eine zusätzliche Stabilisierung der Rohrverbindung erreichen.

Eine ganz besonders bevorzugte Ausgestaltung der erfindungsgemäßen Anordnung besteht darin, daß die Verbindungsmanschette aus einem fluorelastomeren Werkstoff besteht. Der Einsatz flourelastomerer Werkstoffe für die Verbindungsmanschette hat sich für deren Gesamtfunktion sonstigen elastomeren Werkstoffen gegenüber als besonders vorteilhaft erwiesen.

Die Erfindung führt somit zu einer Verbindung von keramischen Innenrohrabschnitten eines Schornsteins, die außerordentlich rasch montierbar (und, falls gewünscht, auch wieder demontierbar) ist und eine ganz erhebliche Verkürzung der aufzuwendenden Montagezeit ermöglicht. Darüberhinaus wird eine sichere und wirksame Abdichtung auch über lange Einsatzdauer gewährleistet, wobei insbesondere auch nachträgliche Veränderungen der Relativposition der zu verbindenden Bauteile zueinander ohne Schwierigkeit ausgeglichen werden können, was eine vorzügliche Abdichtung über besonders lange Zeit hinweg gewährleistet.

Die Erfindung wird nachfolgend anhand der Zeichnung im Prinzip beispielshalber noch näher erläutert. Es zeigen:
Fig. 1 eine prinzipielle Detail-Schnittdarstellung durch den Bereich der Stoßfuge zweier miteinander gemäß der Erfindung verbundener keramischer Innenrohrabschnitte eines Schornsteins und
Fig. 2 eine weitere prinzipielle Detail-Schnittdarstellung einer anderen Ausführungsform für eine erfindungsgemäße Verbindung zweier keramischer Innenrohrabschnitte miteinander.

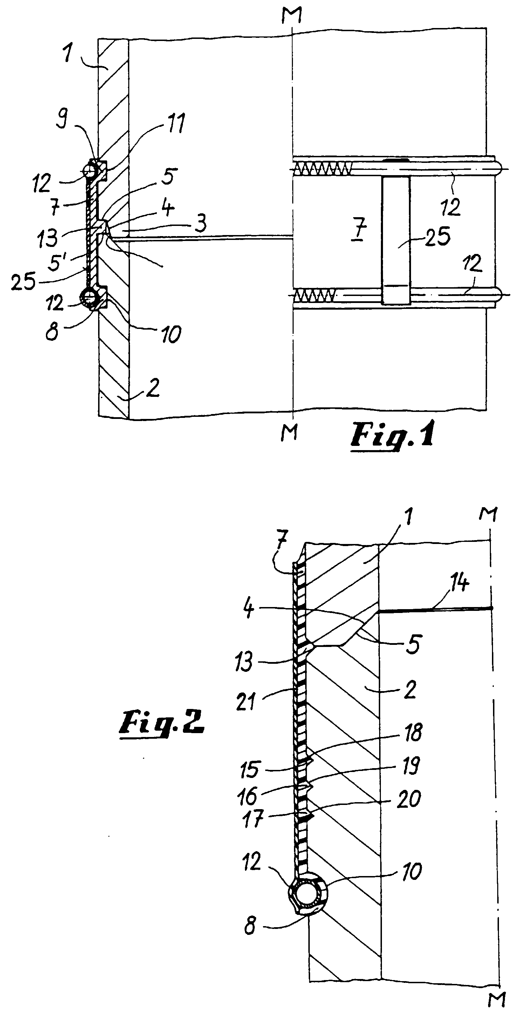

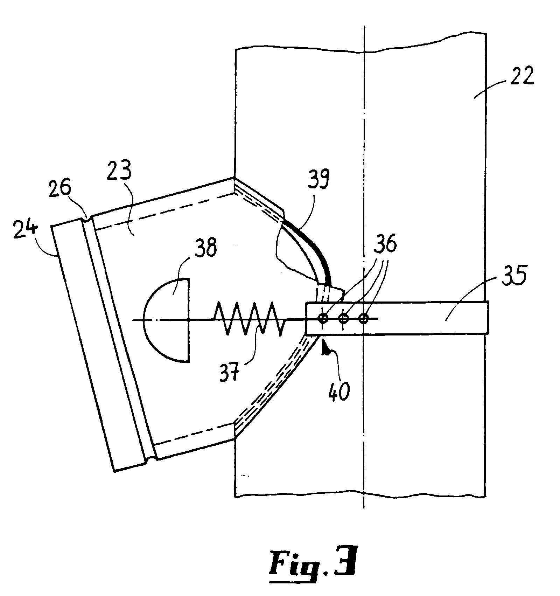

Die Darstellung der Fig. 1 zeigt (in ihrer linken Hälfte geschnitten) die einander zugewandten Endbereiche zweier Rohrabschnitte 1, 2 eines keramischen Innenrohres eines Schornsteins, das aus einer Vielzahl solcher miteinander verbundener und übereinander angeordneter Innenrohrabschnitte aufgebaut ist. Die Länge jedes einzelnen Rohrabschnitts 1, 2 beträgt dabei zwischen 30 cm und 150 cm.

Die einander zugewandten Enden der miteinander zu verbindenden Rohrabschnitte 1, 2 weisen bei der in Fig. 1 gezeigten Ausführungsform jeweils einen radial, d.h. senkrecht zur Mittellinie M-M der Rohrabschnitte 1, 2 verlaufenden, vom Außenmantel jedes Rohrabschnitts 1, 2 nach innen gerichteten ringförmigen Absatz 5 bzw. 5' auf, der bei dem obenliegenden Rohrabschnitt 1 anschließend in einen in Richtung auf den unteren Rohrabschnit 2 hin vorspringenden kegelförmigen Führungs- und Zentrierabsatz 3 übergeht. Am unteren Rohrabschnitt 2 ist eine der Konizität des Führungs- und Zentrierabsatzes 3 entsprechende Ausnehmung mit gleicher Konizität ihrer Seitenwand 6 vorgesehen, die im montierten Zustand (entsprechend Fig. 1) mit dem konischen Führungs- und Zentrierabsatz 3 in Formeingriff steht.

Die Stoßstelle zwischen den Rohrabschnitten 1 und 2 wird außen von einer ringförmig geschlossenen, elastischen Verbindungsmanschette 7 aus fluorelastischem Material umschlossen. Diese Verbindungsmanschette 7 weist an ihren beiden axialen Enden jeweils eine im Querschnitt trapezförmige, von ihrem Innenumfang radial nach innen vorspringende Formwulst 8 bzw. 9 auf, die einstückig an der Verbindungsmanschette 7 angeformt ist, jeweils in eine in die Wandung des anliegenden Rohrabschnitts 1 bzw. 2 eingelassene, ringförmig umlaufende Außennut 10 bzw. 11 formschlüssig eingreift und in diese unter elastischer Verformung eingedrückt ist. Jede Formwulst 8 bzw. 9 wird durch eine ihrer Lage entsprechend auf der Außenseite der Verbindungsmanschette 7 angeordnete, teilweise in die Wandung der Verbindungsmanschette 7 eingelassene Spannfeder 12 in festem Preßsitz in der zugeordneten Außennut 10 bzw. 11 im Rohrabschnitt 2 bzw. 1 unter Vorspannung gehalten. Die ganze ringförmig und geschlossen umlaufende Verbindungsmanschette 7 ist in dem in Fig. 1 gezeigten montierten Zustand sowohl in radialer Richtung elastisch aufgeweitet, wie auch in axialer Richtung elastisch gedehnt, wodurch in Verbindung mit dem Eingriff der Formwülste 8 und 9 in die zugeordneten Aufnahmenuten 10 und 11 und unter Einwirkung der umlaufenden Spannfedern 12 eine feste Verankerung der Verbindungsmansschette 7 an den zu verbindenden Rohrabschntten 1 und 2 gegeben ist, die infolge der elastischen Dehnung der Verbindungsmanschette 7 und der Schwerkraft axial gegeneinander unter Vorspannung angepreßt werden. Die im wesentlichen parallel zueinander verlaufenden Spannfedern 12, die als Spiralfedern ausgeführt sind, werden miteinander über mindestens drei Verbindungsglieder 25 in Form von Edelstahl-Bandabschnitten verbunden. Diese Verbindungslaschen 25 sind bei dem in Fig. 1 gezeigten Ausführungsbeispiel an der unteren Spannfeder 12 unlösbar befestigt, während sie in den Federstrang der oberen Spannfeder 12 bei der Montage eingehängt werden.

Wie aus Fig. 1 ferner erkennbar ist, ist etwa in mittlerer axialer Lage der Verbindungsmanschette 7 an dieser einstückig ein ebenfalls nach innen hin vorspringender, ringförmig umlaufender Dichtstrang 13 vorgesehen, der zwischen beiden axialen Endabsätzen 5 und 5' der Rohrabschnitte 1 und 2 verspannt wird. Diese Verspannung in Verbindung mit der radialen elastischen Aufdehnung der Verbindungsmanschette 7 und den in die Nuten 10 und 11 eingedrückten Formwülsten 8 und 9 ergibt insgesamt eine dreifache elastische Abdichtung der Stoßstelle zwischen den Rohrabschnitten 1 und 2 zur Außenseite hin, die wirksam das Ausdringen von Rauchgaskondensat aus dem Inneren des keramischen Innenrohrs heraus an der betreffenden Stoßstelle verhindert.

Die spezifische Formgebung der Formwülste 8 und 9 sowie des mittleren Dichtungsstrangs 13 kann selbstverständlich auch in anderer als der in Fig. 1 gezeigten Weise vorgenommen werden.

So zeigt Fig. 2 eine weitere Ausführungsform einer Verbindungsmanschette 7 zur Verbindung der Rohrabschnitte 1 und 2, wobei hier auch die einander zugewandten Endflächen der Rohrabschnitte 1, 2 eine andere Ausbildung als in Fig. 1 aufweisen.

Bei der in Fig. 2 gezeigten Ausführungsform ist diesmal der untere Rohrabschnitt 2 mit einem zum obenliegenden Rohrabschnitt 1 hin konisch vorspringenden Führungs- und Zentrierabsatz versehen, dessen konische Außenwand 5 in die mit gleicher Konizität ausgebildete Seitenwand 4 einer entsprechend am oberen Rohrabschnitt 1 angeordneten Vertiefung hineinragt.

An den axialen Enden der Verbindungsmanschette 7 ist beim Ausführungsbeispiel nach Fig. 2 jeweils ein kreisringförmig sich nach innen hin vorwölbender Endbereich ausgebildet, in den von der Außenseite der Verbindungsmanschette 7 her jeweils eine Spannfeder 12 in Form einer endlos umlaufenden Zug-Spiralfeder eingelassen ist. Im Mittelbereich der Verbindungsmanschette 7 ist, wie auch beim Ausführungsbeispiel gemäß Fig. 1, eine radial nach innen hin vorspringende Dichtlippe 13 angeordnet, die durch die radiale Spannung der Manschette radial von außen her in eine entsprechende, im Querschnitt V-förmige Umlaufnut eingepreßt ist, die ihrerseits von den beiden schräg angefasten äußeren Endkanten der einander zugewandten Rohrabschnitte 1 und 2 gebildet wird. Dieser mittlere Dichtstrang 13 dichtet damit genau die äußere Mündung der Stoßstelle zwischen den stumpf gestoßenen und planparallel geschnittenen Rohrabschnitten 1 und 2 radial nach außen hin ab, wobei auch hier wieder die Verbindungsmanschette 7 in dem in Fig. 2 gezeigten montierten Zustand radial elastisch aufgeweitet und auch in axialer Richtung gedehnt ist.

Die Verbindungsmanschette 7 ist auf ihrer äußeren Mantelfläche über ihre gesamte Länge (oder zumindest nahezu über ihre gesamte Länge) hinweg mit einer Schutzschicht 21 in Form einer dünnen, elastischen Schutzfolie versehen, durch die insbesondere auch die Spannfedern 12 radial außen überdeckt und damit geschützt werden.

Zwischen dem im mittleren Bereich der Verbindungsmanschette 7 angeordneten Dichtstrang 13 und der an jedem axialen Ende der Verbindungsmanschette 7 ausgebildeten, nach innen gerichteten Formwulst 10 bzw. 11 (letztere in Fig. 2 nicht mehr gezeigt) sind am Innenumfang der Verbindungsmanschette 7 noch drei weitere, nach innen hin vorspringende und ringförmig umlaufende Dichtungswülste 15, 16 und 17 in gleichen Abständen zueinander vorgesehen, die in entsprechende Umlaufnuten 18, 19 und 20 im Endbereich des Rohrabschnitts 2 unter radialer Vorspannung eingepreßt sind. Bei dem in Fig. 2 gezeigten Ausführungsbeispiel sind die Dichtungswülste 15, 16 und 17 sowie die entsprechenden Aufnahmenuten 18, 19 und 20 im Querschnitt dreieckförmig, sie könnten jedoch auch andere Querschnittsgestaltungen (etwa halbkugelförmig) aufweisen. Daneben bestünde auch die Möglichkeit, die Dichtungswülste 15, 16 und 17 mit einem nur sehr geringen radialen Überstand nach innen hin auszubilden, so daß sie unter Beibehaltung ihrer axialen Ausdehnung eine nur geringe radiale Höhe aufweisen und sich quasi in Form von streifenförmig nach innen vorspringenden Dichtstreifen gegen den dann nicht mit Nuten versehenen Außenmantel des Rohrabschnitts 2 unter elastischer Verformung dichtend anpressen. Anstelle der gezeigten drei zusätzlichen Dichtungswülste können auch nur einer oder zwei oder auch mehr als drei vorgesehen werden, was für den konkreten Einsatzfall im einzelnen bestimmt werden kann.

Das Material der Verbindungsmanschette 7 besteht auch hier wieder aus einem fluorelastomeren Werkstoff. Der Überzug 21 kann ebenfalls aus demselben Material, wenn auch mit wesenstlich geringerer Dicke als die Verbindungsmanschette 7, hergestellt sein. Es besteht aber durchaus auch die Möglichkeit, diesen reinen Schutzzwecken dienenden Überzug 21 auch aus einem anderen geeigneten elastischen Kunststoff, etwa einem Thermoplast, auszubilden.

Zur Montage werden die in den Fig. 1 und 2 gezeigten Verbindungsmanschetten 7 zunächst auf das nach oben hin freie Ende des untenliegenden Rohrabschnitts 2 aufgesteckt, wobei der im Mittelbereich der Verbindungsnmanschette 7 angebrachte umlaufende Dichtungsstrang 13 dann oben auf dem radial nach innen vorspringenden Absatz 5' am oberen Ende des unteren Rohrabschnitts 2 mit Druck aufliegt. Anschließend wird von oben her der obere Rohrabschnitt 1 unter entsprechender Aufdehnung der Verbindungsmanschette 7 in deren obere Hälfte eingeführt und dann die Manschette etwas axial gedehnt, bis sie mit dem an ihrem oberen Ende angebrachten Halteelement in Form der nach innen vorspringenden Formwulst 9 in die entsprechende Außennut 11, die am oberen Rohrabschnitt 1 ausgebildet ist, einschnappt. Anschließend kann die zur elastischen Dehnung der Verbindungsmanschette 7 in deren Axialrichtung eingesetzte Kraft entfernt werden, wonach die beiden Rohrabschnitte 1 und 2 durch die Schwerkraft und unter zusätzlicher Vorspannung durch die elastischen Rückstellkräfte der Verbindungsmanschette 7 mit ihren einander zugewandten Endflächen gegeneinander angedrückt werden. Im Falle der Ausführungsform nach Fig. 1 werden sodann auch noch die an der unteren Spannfeder 12 befestigten Verbindungslaschen 25 mit ihren oberen hakenförmig ausgebildeten Enden in die obere Spannfeder 12 eingehängt.

Die in den Fig. 1 und 2 dargestellten Ausführungsbeispiele für eine Verbindung zwischen zwei miteinander zu verbindenden Teilen sichert infolge der jeweils aufgebrachten, die Andruckkräfte erzeugenden Vorspannung stets eine feste und dichte Verbindung zwischen den verbundenen Teilen, wobei die Verbindung jedoch jederzeit problemfrei auch wieder gelöst werden kann. Der Einsatz von Dichtkitten, Klebemittel o.ä. ist nicht mehr nötig, wobei jedoch darauf hingewiesen wird, daß - falls gewünscht - natürlich zusätzlich auch noch eine Verklebung in der Stoßstelle dennoch vorgenommen werden kann, wenn dies aus irgendwelchen Gründen für zweckmäßig erachtet wird. Im allgemeinen ist eine solche Maßnahme jedoch unnötig, da auch ohne sie eine ausreichend dichte und feste Verbindung zwischen den miteinander zu verbindenden Teilen geschaffen wird. Infolge der bei den gezeigten Verbindungen vorhandenen Elastizitäten (Verbindungsmanschette 7 und Dichtungsstrang 13) lassen sich auch auftretende kleinere Verkantungen zwischen den miteinander zu verbindenden Teilen problemfrei ausgleichen, ohne daß hierdurch die Dichtigkeit oder die Sicherheit der Verbindung leidet. Auch ein nachträgliches, im Laufe der Einsatzdauer auftretendes gewisses Setzen z.B. der eingesetzten Dichtungsstränge wird durch die aufgebrachten Vorspannungen jederzeit ausgeglichen, so daß hierdurch ebenfalls die sichere Funktion der Abdichtung nicht beeinträchtigt wird. Die in den Ausführungsbeispielen gezeigten Verbindunganordnungen lassen sich außerorderlich rasch montieren (oder auch demontieren), wodurch ein ganz erheblicher Zeitgewinn gegenüber der Montage bei bekannten Verbindungsanordnungen erreicht wird. Besonders bevorzugt werden die Innenrohrabschnitte 1, 2 an ihren Verbindungsstellen jeweils mit planparallel abgeschnittenen Rohrenden ausgebildet, was beim praktischen Einsatz zu besonders günstigen Ergebnissen führt.

## Patentansprüche

1. Verbindung zweier Rohrabschnitte (1,2) des keramischen Innenrohrs eines Schornsteins, bei der die einander zugewandten Endflächen beider Rohrabschnitte (1,2) vorzugsweise planparallel abgeschnitten sind und an jedem Rohrabschnitt (1;2) in axialem Abstand von jeder seiner Endflächen eine Außennut (10;11) ausgebildet ist, in die Halteelemente (8;9) formschlüssig eingreifen, die radial innen an einer Verbindungsmanschette (7) vorspringen, welche die Endbereiche beider Rohrabschnitte (1;2) außen überdeckt, **dadurch gekennzeichnet**, daß die Verbindungsmanschette (7) aus elastomerem Werkstoff besteht und als eine ringförmig geschlossen umlaufende elastische Spanneinrichtung ausgebildet ist, die unter radialer Aufweitung sowie unter axialer Dehnung auf den Endbereichen beider Rohrabschnitte (1,2) sitzt und diese unter Vorspannung axial gegeneinander anpreßt, wobei die in die Außennuten (10,11) der Rohrabschnitte (1,2) eingreifenden Halteelemente in Form von am Innenumfang der Verbindungsmanschette (7) angeformten Formwülsten (8,9) ausgebildet sind und auf der Außenseite der Verbindungsmanschette (7), der axialen Lage der Formwülste (8,9) entsprechend, jeweils ringförmig umlaufende Spannfedern (12) vorgesehen sind.

2. Verbindung nach Anspruch 1, dadurch gekennzeichnet, daß an der Verbindungsstelle der zu verbindenden Rohrabschnitte (2) und entlang dieser verlaufend eine elastische Dichtung (13) vorgesehen ist, die als am Innenumfang der Verbindungsmanschette (7) einstückig angeformter, radial nach innen vorspringender, ringförmig umlaufender Dichtstreifen (13) ausgebildet ist.

3. Verbindung nach Anspruch 2, dadurch gekennzeichnet, daß der Dichtstreifen (13) im Querschnitt lippenförmig ist.

4. Verbindung nach Anspruch 2, dadurch gekennzeichnet, daß der Dichtstreifen im Querschnitt im wesentlichen dreieckförmig ist.

5. Verbindung nach einem der Ansprüche 1 bis 4, dadurch gekennzeichnet, daß die ringförmig umlaufenden Spannfedern (12) wenigstens teilweise in die Verbindungmanschette (7) eingelassen sind.

6. Verbindung nach einem der Ansprüche 2 bis 5, dadurch gekennzeichnet, daß am Innenumfang der Verbindungsmanschette (7) jedem Endbereich der Rohrabschnitte (1, 2) mindestens noch jeweils ein ringförmig umlaufender, einstückig mit der Verbindungsmanschette (7) ausgebildeter Dichtungswulst (18; 19; 20) zugeordnet ist, der unter elastischer Deformation gegen die Außenfläche des zugeordneten Rohrabschnitts (2) anliegt.

7. Verbindung nach einem der Ansprüche 1 bis 6, dadurch gekennzeichnet, daß die Formwülste (8, 9) im Querschnitt kreisabschnittförmig oder trapezförmig ausgebildet sind.

8. Verbindung nach einem der Ansprüche 1 bis 7, dadurch gekennzeichnet, daß die Spannfedern (12) aus rostfreiem Stahl bestehen.

9. Verbindung nach Anspruch 7 oder 8, dadurch gekennzeichnet, daß als Spannfedern (12) Spiralfedern eingesetzt sind.

10. Verbindung nach einem der Ansprüche 1 bis 9, dadurch gekennzeichnet, daß die Verbindungsmanschette (7) aus fluorelastomerem Werkstoff besteht.

11. Verbindung nach einem der Ansprüche 1 bis 10, dadurch gekennzeichnet, daß die Spannfedern (12) mit einer elastischen Schutzschicht (21) nach außen hin abgedeckt sind.

12. Verbindung nach einem der Ansprüche 1 bis 11, dadurch gekennzeichnet, daß die Verbindungsmanschette (7) auf ihrem Außenumfang zumindest teilweise mit einer elastischen Schutzschicht (21) versehen ist.

13. Verbindung nach einem der Ansprüche 1 bis 12, dadurch gekennzeichnet, daß die Spannfedern (12) durch Verbindungsglieder (25), vorzugsweise mindestens drei Verbindungsglieder, miteinander verbunden sind.

14. Verbindung nach Anspruch 13, dadurch gekennzeichnet, daß die Verbindungsglieder als Metallstreifen (25), bevorzugt aus rostfreiem Stahl, ausgebildet sind, die an ihrem einen Ende an einer Spannfeder (12) fest angebracht und an ihrem anderen Ende in die andere Spannfeder (12) einhängbar sind.

## Claims

1. Connection of two pipe sections (1, 2) of the ceramic inner pipe of a chimney in which the end surfaces, which are directed towards one another, of the two pipe sections (1, 2) are cut off, preferably with parallel faces, and formed on each pipe section (1; 2) at an axial spacing from each of its end surfaces is an external groove (10; 11), in which retaining elements (8; 9) engage in a form-locking manner, which project radially inwardly on a connecting collar (7) which overlaps the end regions of the two pipe sections (1; 2) externally, characterised in that the connecting collar (7) comprises elastomeric material and is constructed as an annularly closed, encircling, elastic clamping device which is disposed, radially enlarged and axially stretched, on the end regions of the two pipe sections (1, 2) and presses them axially together with a biassing force, the retaining elements engaging in the external grooves (10, 11) in the pipe sections (1, 2) being constructed in the form of moulded beads (8, 9) moulded onto the internal periphery of the connecting collar (7) and annularly encircling clamping springs (12) being provided on the outer side of the connecting collar (7), corresponding to the axial position of the moulded beads (8, 9).

2. Connection as claimed in Claim 1, characterised in that provided at the connection point of the pipe sections (2) to be connected and extending along it there is an elastic seal (13) which is constructed as an encircling, annular sealing strip (13), which projects radially inwardly and is moulded integrally onto the internal periphery of the connecting collar (7).

3. Connection as claimed in Claim 2, characterised in that the sealing strip (13) is lip-shaped in cross-section.

4. Connection as claimed in Claim 2, characterised in that the sealing strip is of substantially triangular shape cross-section.

5. Connection as claimed in one of Claims 1 to 4, characterised in that the annular, encircling clamping springs (12) are at least partially embedded in the connecting collar (7).

6. Connection as claimed in one of Claims 2 to 5, characterised in that associated with each end region of the pipe sections (1, 2) on the internal periphery of the connecting collar (7) there is a respective annular, encircling sealing bead (18; 19; 20), formed integrally with the connecting collar (7), which engages the external surface of the associated pipe section (2) whilst elastically deformed.

7. Connection as claimed in one of Claims 1 to 6, characterised in that the moulded beads (8, 9) are of circular segmental or trapezoidal shape in cross-section.

8. Connection as claimed in one of Claims 1 to 7, characterised in that the clamping springs (12) comprise stainless steel.

9. Connection as claimed in Claim 7 or 8, characterised in that spiral springs are used as the clamping springs (12).

10. Connection as claimed in one of Claims 1 to 9, characterised in that the connecting collar (7) comprises fluoroelastomeric material.

11. Connection as claimed in one of Claims 1 to 10, characterised in that the clamping springs (12) are covered externally with an elastic protective layer (21).

12. Connection as claimed in one of Claims 1 to 11, characterised in that the connecting collar (7) is provided on its external periphery, at least partially, with an elastic protective layer (21).

13. Connection as claimed in one of Claims 1 to 12, characterised in that the clamping springs (12) are connected together by connecting elements (25), preferably at least three connecting elements.

14. Connection as claimed in Claim 13, characterised in that the connecting elements are constructed as metallic strips (25), preferably of stainless steel, which are firmly attached at one end to a clamping spring (12) and engageable at the other end in the other clamping spring (12).

## Revendications

1. Liaison de deux portions de tube (1, 2) du conduit intérieur céramique d'une cheminée, dans laquelle les faces terminales tournées l'une vers l'autre des deux portions de tube (1, 2) sont coupées de préférence planes et parallèles et sur chaque portion de tube (1 ; 2) il est formé, à distance axiale de chacune de ses faces d'extrémité, une rainure extérieure (10 ; 11), dans laquelle s'engagent par concordance de forme les éléments de maintien (8 ; 9), qui font saillie radialement à l'intérieur sur un manchon de liaison (7), qui recouvrent extérieurement les zones d'extrémité des deux portions de tube (1 ; 2), caractérisée en ce que le manchon de liaison (7) est en matériau élastomère et est configuré en dispositif de serrage élastique fermé, continu, en forme d'anneau, qui par élargissement radial et extension axiale repose sur les zones d'extrémité des deux portions de tube (1, 2) et presse celles-ci axialement l'une contre l'autre, sous précontrainte, les éléments de maintien, s'engageant dans les rainures extérieures (10, 11) des portions de tube (1, 2), étant configurés sous la forme de bourrelets de forme (8, 9), venus de moulage sur le pourtour intérieur du manchon de liaison (7) et sur le côté extérieur du manchon de liaison (7), correspondant à la position axiale des bourrelets de forme (8, 9), sont prévus des ressorts de serrage (12) s'étendant en forme d'anneau.

2. Liaison selon la revendication 1, caractérisée en ce qu'aux points de liaison des portions de tube (2) à relier et s'étendant le long de celles-ci, il est prévu une étanchéité élastique (13), qui est configurée en bande d'étanchéité (13) formée d'une seule pièce sur le pourtour intérieur du manchon de liaison (7), faisant saillie radialement vers l'intérieur, s'étendant en forme d'anneau.

3. Liaison selon la revendication 2, caractérisée en ce que la bande d'étanchéité (13) a une section transversale en forme de lèvre.

4. Liaison selon la revendication 2, caractérisée en ce que la bande d'étanchéité a une section transversale sensiblement triangulaire.

5. Liaison selon l'une des revendications 1 à 4, caractérisée en ce que les ressorts de serrage (12) s'étendant en anneau sont encastrés au moins en partie dans le manchon de liaison (7).

6. Liaison selon l'une des revendications 2 à 5, caractérisée en ce que sur le pourtour intérieur du manchon de liaison (7) est associé à chaque zone d'extrémité des portions de tube (1, 2), au moins encore un bourrelet d'étanchéité (18 ; 19 ; 20) s'étendant en forme d'anneau, configuré d'une seule pièce avec le manchon de liaison (7), qui s'applique contre la face extérieure de la portion de tube (2) associée, sous déformation élastique.

7. Liaison selon l'une des revendications 1 à 6, caractérisée en ce que les bourrelets de forme (8, 9) ont une section transversale en forme de portion de cercle ou trapézoïdale.

8. Liaison selon l'une des revendications 1 à 7, caractérisée en ce que les ressorts de serrage (12) sont en acier inoxydable.

9. Liaison selon la revendication 7 ou 8, caractérisée en ce qu'on utilise comme ressort de serrage (12) des ressorts spiraux.

10. Liaison selon l'une des revendications 1 à 9, caractérisée en ce que le manchon de liaison (7) est en matériau fluor-élastomère.

11. Liaison selon l'une des revendications 1 à 10, caractérisée en ce que les ressorts de serrage (12) sont recouverts vers l'extérieur avec une couche de protection (21) élastique.

12. Liaison selon l'une des revendications 1 à 11, caractérisée en ce que le manchon de liaison (7) est pourvu sur son pourtour extérieur, au moins partiellement, d'une couche de protection (21) élastique.

13. Liaison selon l'une des revendications 1 à 12, caractérisée en ce que les ressorts de serrage (12) sont reliés entre eux par des organes de liaison (25), de préférence au moins trois organes de liaison.

14. Liaison selon la revendication 13, caractérisée en ce que les organes de liaison sont configurés en bandes métalliques (25), de préférence en acier inoxydable, qui à l'une de leurs extrémités sont fixées sur un ressort de serrage (12) et à leur autre extrémité peuvent être accrochées dans l'autre ressort de serrage (12).
